# EUROPEAN PATENT APPLICATION

(11) **EP 3 309 469 A1**
(43) Date of publication of application: **18.04.2018**
(21) Application number: 16806624.9
(22) Date of filing: 26.04.2016
(51) Int. Cl.: F24F 11/00, F24F 11/02

(54) **RETURN AIR SUPERHEAT DEGREE TEST METHOD FOR MULTI-SPLIT SYSTEM AND MULTI-SPLIT SYSTEM**

(30) Priority: 12.06.2015 CN 201510324118
(71) Applicant: GD Midea Heating & Ventilating Equipment Co., Ltd., Foshan Guangdong 528311 (CN); Midea Group Co., Ltd., Guangdong 528311 (CN)
(72) Inventor: LUO, Bin, Foshan Guangdong 528311 (CN); LI, Yuanyang, Foshan Guangdong 528311 (CN)
(74) Representative: Maiwald Patentanwalts GmbH
(86) International application number: PCT/CN2016/080247
(87) International publication number: WO 2016/197726

(57) **Abstract**

The present invention further discloses a method for measuring a degree of superheat of return air of a VRF air conditioning system. The VRF air conditioning system includes: a re-cooling circuit constituted of a first heat exchanger and a second heat exchanger, and a first temperature sensor, a second temperature sensor and a third temperature sensor. The method includes the following steps: obtaining a first temperature value detected by the first temperature sensor, a second temperature value detected by the second temperature sensor, and a third temperature value detected by the third temperature sensor; obtaining a minimum value between the first temperature value and the second temperature value, and a maximum value between the third temperature value and the second temperature value; and calculating a degree of superheat according to the minimum value and the maximum value. The method employs the temperature sensors to achieve accurate measurement of the degree of superheat of the refrigerant at an outlet of the re-cooling circuit, so as to ensure that the refrigerant entering a compressor is not in the liquid form and reduce the cost greatly. The present invention further discloses a VRF air conditioning system.

## Description

### FIELD

The present invention relates to a field of air conditioning technologies, and particularly, to a method for measuring a degree of superheat of return air of a VRF (Variable Refrigerant Flow) air conditioning system and a VRF air conditioning system.

### BACKGROUND

A heat recovery VRF air conditioning system may utilize heat of condensation and heat of evaporation of a refrigerating system simultaneously, which improves energy efficiency greatly and thus has a broad market prospect. A two-tube type VRF air conditioning system is a heat recovery system constituted by connecting an outdoor machine with a flow distributing device MS via a high-pressure tube and a low-pressure tube. The flow distributing device MS may distribute a gaseous refrigerant and a liquid refrigerant to respective indoor machines in rooms with different needs, so as to meet a refrigerating or heating requirement of different rooms.

In order to avoid flash vaporization of a high-pressure liquid refrigerant during delivery to the indoor machine, a sufficient degree of undercooling is needed to ensure a refrigerating effect. Thus, a re-cooling circuit is provided in the flow distributing device MS, and two heat exchangers connected in series serve as a re-cooler, such that a part of the refrigerant entering the indoor machine is re-cooled by the re-cooler, while another part of the refrigerant through the re-cooling circuit takes away heat released by the re-cooler, the refrigerant passing through the two heat exchangers and the refrigerant discharged from the indoor machine are mixed and then return to a compressor suction pipe in the outdoor machine.

For the two-tube type VRF air conditioning system in a refrigerating mode and in a main refrigerating mode, the refrigerant returning to the compressor in the outdoor machine from the flow distributing device MS needs to keep a certain degree of superheat, so that the refrigerant may be fully gasified and then return to the compressor suction pipe, which may prevent the liquid refrigerant from damaging the compressor. Therefore, the part of the refrigerant passing through the re-cooler needs to undergo measurement of degree of superheat to ensure that the part of the refrigerant has a certain degree of superheat, and hence that incoming air of the compressor has a certain degree of superheat. However, as for the measurement of degree of superheat acted on the part of the refrigerant passing through the re-cooler at present, measurement accuracy is not enough and cost is high.

### SUMMARY

The present application is based on the inventor's knowledge and research on the following problems.

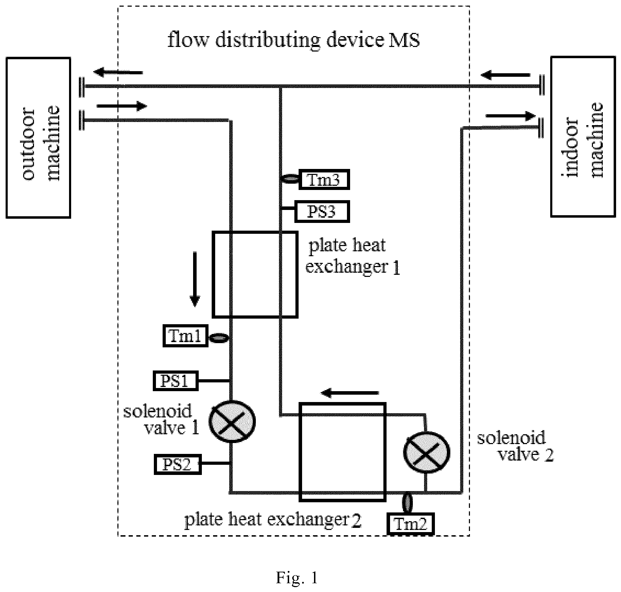

In the related art, as shown in Fig. 1, the temperature and pressure of a part of a refrigerant at an outlet of a re-cooling circuit are respectively measured by a temperature sensor Tm3 and a pressure sensor PS3, so as to acquire a saturation temperature TePS3 and a degree of superheat of a refrigerant entering the outlet of the re-cooling circuit of an outdoor machine, SH1=Tm3-TePS3. Thus, by controlling the degree of superheat of the refrigerant at the outlet of the re-cooling circuit to be greater than a certain value, it may be ensured that the refrigerant entering a compressor is not in the liquid form, thereby avoiding a liquid impact on the compressor.

However, in the existing manufacturing process, the cost of the pressure sensor is higher than that of the temperature sensor, and the reliability thereof is lower than that of the temperature sensor, so the measurement of the degree of superheat SH1 of the refrigerant at the outlet of the re-cooling circuit is not accurate, and thus the degree of superheat of the refrigerant entering the compressor cannot be guaranteed, which will affect the operational security of the compressor and lead to high cost.

The present invention aims to solve one of the technical problems above in the related art to at least some extent. Accordingly, an objective of the present invention is to provide a method for measuring a degree of superheat of return air of a VRF air conditioning system, which only adopts temperature sensors to achieve accurate measurement of the degree of superheat of the refrigerant at the outlet of the re-cooling circuit, so as to ensure that the refrigerant entering the compressor is not in the liquid form, and reduce the cost considerably.

Another objective of the present invention is to provide a VRF air conditioning system.

In order to achieve the objective, embodiments of a first aspect of the present invention provide a method for measuring a degree of superheat of return air of a VRF air conditioning system. The VRF air conditioning system includes a re-cooling circuit constituted of a first heat exchanger and a second heat exchanger, and a first temperature sensor, a second temperature sensor and a third temperature sensor, in which the first temperature sensor is provided at an inlet of a second heat exchange flow path of the second heat exchanger, the second temperature sensor is provided between an outlet of the second heat exchange flow path of the second heat exchanger and an inlet of a second heat exchange flow path of the first heat exchanger, and the third temperature sensor is provided at an outlet of the second heat exchange flow path of the first heat exchanger. The method includes the following steps: obtaining a first temperature value detected by the first temperature sensor, a second temperature value detected by the second temperature sensor, and a third temperature value detected by the third temperature sensor; obtaining a minimum value between the first temperature value and the second temperature value, and a maximum value between the third temperature value and the second temperature value; and calculating a degree of superheat according to the minimum value and the maximum value.

With the method according to the embodiments of the present invention, it is possible to accurately measure the degree of superheat of the refrigerant at the outlet of the re-cooling circuit, i.e. at the outlet of the second heat exchange flow path of the first heat exchanger, via the first temperature sensor, the second temperature sensor and the third temperature sensor. In such a way, the refrigerant entering the compressor in the outdoor machine is not in the liquid form, which avoids the liquid impact on the compressor and hence guarantees the operational reliability of the compressor and the refrigerating effect of the indoor machine, and the pressure sensor is no longer needed, which may reduce the cost greatly and improve the reliability.

According to an embodiment of the present invention, the degree of superheat may be calculated according to a formula: SH=MAX (T₂, Tₘ) - MIN (Tₘ, T₁), in which SH represents the degree of superheat, T₁ is the first temperature value, Tₘ (T_{middle}) is the second temperature value, and T₂ is the third temperature value.

According to an embodiment of the present invention, the method further includes: controlling the compressor in the outdoor machine according to the degree of superheat.

The first heat exchanger and the second heat exchanger both are configured as plate heat exchangers.

In the embodiment of the present invention, the VRF air conditioning system works in a refrigerating mode.

In order to achieve the objective, embodiments of a second aspect of the present invention provide a VRF air conditioning system. The VRF air conditioning system include: an outdoor machine; an indoor machine; a flow distributing device including a re-cooling circuit constituted of a first heat exchanger and a second heat exchanger, and a first temperature sensor, a second temperature sensor and a third temperature sensor, in which the first temperature sensor is provided at an inlet of a second heat exchange flow path of the second heat exchanger, the second temperature sensor is provided between an outlet of the second heat exchange flow path of the second heat exchanger and an inlet of a second heat exchange flow path of the first heat exchanger, and the third temperature sensor is provided at an outlet of the second heat exchange flow path of the first heat exchanger; and a control module configured to obtain a first temperature value detected by the first temperature sensor, a second temperature value detected by the second temperature sensor, and a third temperature value detected by the third temperature sensor, obtain a minimum value between the first temperature value and the second temperature value and a maximum value between the third temperature value and the second temperature value, and calculate a degree of superheat according to the minimum value and the maximum value.

For the VRF air conditioning system according to the embodiment of the present invention, it is possible to accurately measure the degree of superheat of the refrigerant at the outlet of the re-cooling circuit, i.e. at the outlet of the second heat exchange flow path of the first heat exchanger, via the first temperature sensor, the second temperature sensor and the third temperature sensor. In such a way, the refrigerant entering the compressor in the outdoor machine is not in the liquid form, which avoids the liquid impact on the compressor and hence guarantees the operational reliability of the compressor and the refrigerating effect of the indoor machine, and the pressure sensor is no longer needed, which may reduce the cost greatly and improves the reliability.

According to an embodiment of the present invention, the control module calculates the degree of superheat according to a formula: SH=MAX (T₂, Tₘ) - MIN (Tₘ, T₁), in which SH represents the degree of superheat, T₁ is the first temperature value, Tₘ is the second temperature value, and T₂ is the third temperature value.

According to an embodiment of the present invention, the control module further controls the compressor in the outdoor machine according to the degree of superheat.

The first heat exchanger and the second heat exchanger are configured as plate heat exchangers.

In the embodiment of the present invention, the VRF air conditioning system works in the refrigerating mode.

### BRIEF DESCRIPTION OF THE DRAWINGS

Fig. 1 is a schematic view of measurement of a degree of superheat of a refrigerant at an outlet of a re-cooling circuit via a temperature sensor Tm3 and a pressure sensor PS3 in the related art.
Fig. 2 is a schematic view of measurement of a degree of superheat of a refrigerant at an outlet of a re-cooling circuit of a VRF air conditioning system via a first temperature sensor, a second temperature sensor and a third temperature sensor according to an embodiment of the present invention; and
Fig. 3 is a flow chart of a method for measuring a degree of superheat of return air of a VRF air conditioning system according to an embodiment of the present invention.

### DETAILED DESCRIPTION

Embodiments of the present invention will be described in detail and examples of the embodiments will be illustrated in the accompanying drawings. The same or similar elements and the elements having same or similar functions are denoted by like reference numerals throughout the descriptions. The embodiments described herein with reference to the drawings are explanatory, which aim to illustrate the present invention, but shall not be construed to limit the present invention.

In the following, a method for measuring a degree of superheat of return air of a VRF air conditioning system and a VRF air conditioning system according to embodiments of the present invention will be described with reference to the accompanying drawings.

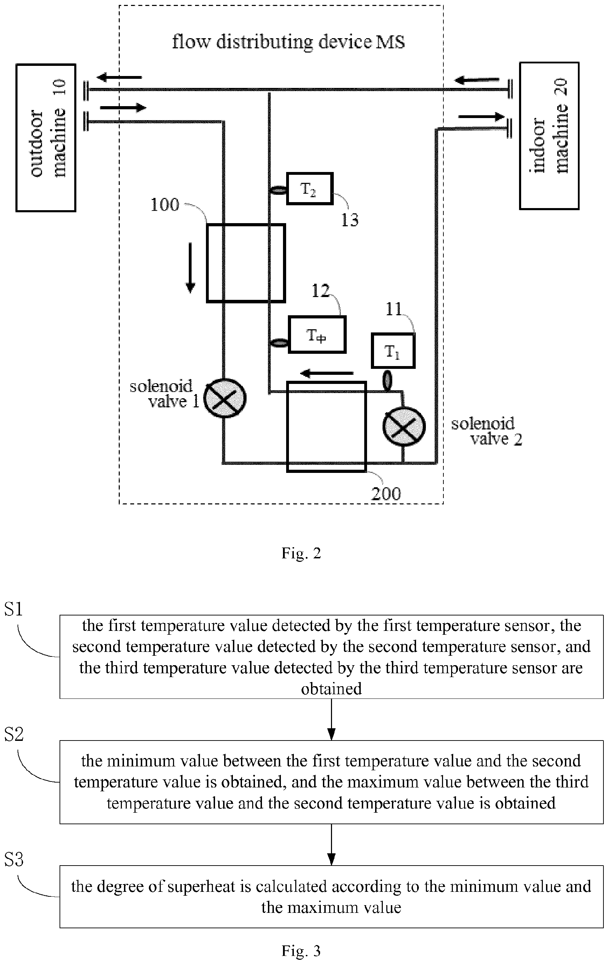

As shown in Fig. 2, the VRF air conditioning system according to an embodiment of the present invention includes an outdoor machine 10, an indoor machine 20 (probably a plurality of indoor machines), a flow distributing device MS and a control module (not shown). The flow distributing device MS includes a re-cooling circuit constituted of a first heat exchanger 100 and a second heat exchanger 200; and a first temperature sensor 11, a second temperature sensor 12 and a third temperature sensor 13, in which the first temperature sensor 11 is provided at an inlet of a second heat exchange flow path of the second heat exchanger 200, the second temperature sensor 12 is provided between an outlet of the second heat exchange flow path of the second heat exchanger 200 and an inlet of a second heat exchange flow path of the first heat exchanger 100, and the third temperature sensor 13 is provided at an outlet of the second heat exchange flow path of the first heat exchanger 100.

Moreover, as shown in Fig. 2, an inlet of a first heat exchange flow path of the first heat exchanger 100 is connected to the outdoor machine 10 via a high-pressure tube; an outlet of the first heat exchange flow path of the first heat exchanger 100 is connected to an inlet of a first heat exchange flow path of the second heat exchanger 200 via a solenoid valve 1; an outlet of the first heat exchange flow path of the second heat exchanger 200 is connected to the indoor machine 20 and also connected to the inlet of the second heat exchange flow path of the second heat exchanger 200 via a solenoid valve 2; the outlet of the second heat exchange flow path of the first heat exchanger 100 is also connected to the outdoor machine 10 via a low-pressure pipe. The first heat exchanger 100 and the second heat exchanger 200 both are configured as plate heat exchangers.

In the embodiment of the present invention, the control module is configured to obtain a first temperature value T₁ detected by the first temperature sensor 11, a second temperature value Tₘ (T_{middle}) detected by the second temperature sensor 12, and a third temperature value T₂ detected by the third temperature sensor 13, and obtain a minimum value between the first temperature value and the second temperature value and a maximum value between the third temperature value and the second temperature value; then the control module calculates a degree of superheat according to the minimum value and the maximum value.

According to an embodiment of the present invention, the control module may calculate the degree of superheat according to the following formula: SH=MAX (T₂, Tₘ) - MIN (Tₘ, T₁), in which SH represents the degree of superheat, T₁ is the first temperature value, Tₘ is the second temperature value, and T₂ is the third temperature value.

That is, in this embodiment of the present invention, specifically, the temperature sensors, i.e. the first to third temperature sensors, are provided at a gaseous refrigerant inlet of the re-cooling circuit, i.e. the inlet of the second heat exchange flow path of the second heat exchanger, in between the re-cooling circuit, i.e. between the two heat exchangers, and at an outlet of the re-cooling circuit, i.e. at the outlet of the second heat exchange flow path of the first heat exchanger, respectively. In such a way, a pressure sensor originally at the outlet of the re-cooling circuit is replaced by the two heat exchangers, so as to reduce the cost. Then, the degree of superheat of the refrigerant at the outlet of the re-cooling circuit may be calculated based on the formula: SH=MAX (T₂, Tₘ) - MIN (Tₘ, T₁), in which as the pressure drop of the two heat exchangers is relatively large, saturation pressure will gradually decrease. Therefore, when the flow rate of the refrigerant in the re-cooling circuit is relatively large and the temperature Tₘ in the between the re-cooling circuit is not overheated, then T₁< Tₘ < T₂, in which case SH = T₂ - Tₘ; when the flow rate of the refrigerant in the re-cooling circuit is relatively small and the temperature Tₘ in between the re-cooling circuit is overheated, then T₂< Tₘ, in which case SH = Tₘ - T₁.

Thus, the second temperature sensor provided between the two plate heat exchangers solves the difficulty of temperature detection inside the plate heat exchangers, and it is possible to more accurately estimate the degree of superheat of the refrigerant passing through the outlet of the re-cooling circuit, thereby ensuring more accurate control over various valve bodies, a refrigerating effect of the refrigerating indoor machine, and operational reliability of the compressor. That is, according to an embodiment of the present invention, the control module further controls the compressor in the outdoor machine according to the degree of superheat SH, to make sure that the measured degree of superheat SH is greater than a certain value, so that the refrigerant entering the compressor will not be in the liquid form, thereby avoiding a liquid impact on the compressor.

In the embodiment of the present invention, the VRF air conditioning system works in a refrigerating mode, like a main refrigerating mode or a pure refrigerating mode.

For the VRF air conditioning system according to the embodiment of the present invention, it is possible to accurately measure the degree of superheat of the refrigerant at the outlet of the re-cooling circuit, i.e. at the outlet of the second heat exchange flow path of the first heat exchanger, via the first temperature sensor, the second temperature sensor and the third temperature sensor. In such a way, the refrigerant entering the compressor in the outdoor machine is not in the liquid form, which avoids the liquid impact on the compressor and hence guarantees the operational reliability of the compressor and the refrigerating effect of the indoor machine, and the pressure sensor is no longer needed, which may reduce the cost greatly and improves the reliability.

Fig. 3 is a flow chart of a method for measuring a degree of superheat of return air of a VRF air conditioning system according to an embodiment of the present invention. The VRF air conditioning system is the VRF air conditioning system described in the above embodiments, and may include the re-cooling circuit constituted of the first heat exchanger and the second heat exchanger; and the first temperature sensor, the second temperature sensor and the third temperature sensor, in which the first temperature sensor is provided at the inlet of the second heat exchange flow path of the second heat exchanger, the second temperature sensor is provided between the outlet of the second heat exchange flow path of the second heat exchanger and the inlet of the second heat exchange flow path of the first heat exchanger, and the third temperature sensor is provided at the outlet of the second heat exchange flow path of the first heat exchanger.

As shown in Fig. 3, the method according to the embodiment of the present invention includes the following steps.

S1: the first temperature value detected by the first temperature sensor, the second temperature value detected by the second temperature sensor, and the third temperature value detected by the third temperature sensor are obtained.

S2: the minimum value between the first temperature value and the second temperature value is obtained, and the maximum value between the third temperature value and the second temperature value is obtained.

S3: the degree of superheat is calculated according to the minimum value and the maximum value, i.e. the degree of superheat of the refrigerant at the outlet of the re-cooling circuit (at the outlet of the second heat exchange flow path of the first heat exchanger) is calculated.

According to an embodiment of the present invention, the degree of superheat may be calculated according to the following formula: SH=MAX (T₂, Tₘ) - MIN (Tₘ, T₁), in which SH represents the degree of superheat, T₁ is the first temperature value, Tₘ is the second temperature value, and T₂ is the third temperature value.

Moreover, the method further includes: controlling the compressor in the outdoor machine according to the degree of superheat. Thus, it is ensured that the degree of superheat SH is greater than a certain value to prevent the liquid refrigerant from entering the compressor and hence avoid the liquid impact on the compressor.

In the embodiment of the present invention, the VRF air conditioning system works in the refrigerating mode, like the main refrigerating mode or the pure refrigerating mode.

With the method according to the embodiment of the present invention, it is possible to accurately measure the degree of superheat of the refrigerant at the outlet of the re-cooling circuit, i.e. at the outlet of the second heat exchange flow path of the first heat exchanger, via the first temperature sensor, the second temperature sensor and the third temperature sensor. In such a way, the refrigerant entering the compressor in the outdoor machine is not in the liquid form, which avoids the liquid impact on the compressor and hence guarantees the operational reliability of the compressor and the refrigerating effect of the indoor machine, and the pressure sensor is no longer needed, which may reduce the cost greatly and improves the reliability.

In the specification, it is to be understood that terms such as "central," "longitudinal", "lateral", "length," "width," "thickness," "upper," "lower," "front," "rear," "left," "right," "vertical," "horizontal," "top," "bottom," "inner," "outer," "clockwise," "counterclockwise," "axial," "radial," and "circumferential" should be construed to refer to the orientation or the position as then described or as shown in the drawings under discussion. These relative terms are only used to simplify description of the present invention, and do not indicate or imply that the device or element referred to must have a particular orientation, or constructed or operated in a particular orientation. Thus, these terms cannot be constructed to limit the present invention.

In addition, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present invention, "a plurality of" means two or more than two, unless specified otherwise.

In the present invention, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

In the present invention, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of" a second feature may include an embodiment in which the first feature is right or obliquely "on," "above," or "on top of" the second feature, or just means that the first feature is at a height higher than that of the second feature; while a first feature "below," "under," or "on bottom of" a second feature may include an embodiment in which the first feature is right or obliquely "below," "under," or "on bottom of" the second feature, or just means that the first feature is at a height lower than that of the second feature.

Reference throughout this specification to "an embodiment," "some embodiments," "an example," "a specific example," or "some examples," means that a particular feature, structure, material, or characteristic described in connection with the embodiment or example is included in at least one embodiment or example of the present invention. Thus, the appearances of the above phrases throughout this specification are not necessarily referring to the same embodiment or example of the present invention. Furthermore, the particular features, structures, materials, or characteristics may be combined in any suitable manner in one or more embodiments or examples.

Although embodiments of the present invention have been shown and described, it would be appreciated by those skilled in the art that changes, modifications, alternatives and variations can be made in the embodiments without departing from the scope of the present invention. The scope of the present invention is defined by the claims and the like.

## Claims

1. A method for measuring a degree of superheat of return air of a VRF air conditioning system, wherein the VRF air conditioning system comprises a re-cooling circuit constituted of a first heat exchanger and a second heat exchanger, and a first temperature sensor, a second temperature sensor and a third temperature sensor, in which the first temperature sensor is provided at an inlet of a second heat exchange flow path of the second heat exchanger, the second temperature sensor is provided between an outlet of the second heat exchange flow path of the second heat exchanger and an inlet of a second heat exchange flow path of the first heat exchanger, and the third temperature sensor is provided at an outlet of the second heat exchange flow path of the first heat exchanger, and wherein the method comprises:
obtaining a first temperature value detected by the first temperature sensor, a second temperature value detected by the second temperature sensor, and a third temperature value detected by the third temperature sensor;
obtaining a minimum value between the first temperature value and the second temperature value, and a maximum value between the third temperature value and the second temperature value; and
calculating a degree of superheat according to the minimum value and the maximum value.

2. The method according to claim 1, wherein the degree of superheat is calculated according to a formula: SH=MAX (T₂, Tₘ) - MIN (Tₘ, T₁), in which SH represents the degree of superheat, T₁ is the first temperature value, Tₘ is the second temperature value, and T₂ is the third temperature value.

3. The method according to claim 1, further comprising: controlling a compressor in an outdoor machine according to the degree of superheat.

4. The method according to any one of claims 1 to 3, wherein the first heat exchanger and the second heat exchanger both are configured as plate heat exchangers.

5. The method according to claim 1, wherein the VRF air conditioning system works in a refrigerating mode.

6. A VRF air conditioning system, comprising:
an outdoor machine;
an indoor machine;
a flow distributing device comprising a re-cooling circuit constituted of a first heat exchanger and a second heat exchanger, and a first temperature sensor, a second temperature sensor and a third temperature sensor, wherein the first temperature sensor is provided at an inlet of a second heat exchange flow path of the second heat exchanger, the second temperature sensor is provided between an outlet of the second heat exchange flow path of the second heat exchanger and an inlet of a second heat exchange flow path of the first heat exchanger, and the third temperature sensor is provided at an outlet of the second heat exchange flow path of the first heat exchanger; and
a control module configured to obtain a first temperature value detected by the first temperature sensor, a second temperature value detected by the second temperature sensor, and a third temperature value detected by the third temperature sensor, obtain a minimum value between the first temperature value and the second temperature value and a maximum value between the third temperature value and the second temperature value, and calculate a degree of superheat according to the minimum value and the maximum value.

7. The VRF air conditioning system according to claim 6, wherein the control module calculates the degree of superheat according to a formula: SH=MAX (T₂, Tₘ) - MIN (Tₘ, T₁), in which SH represents the degree of superheat, T₁ is the first temperature value, Tₘ is the second temperature value, and T₂ is the third temperature value.

8. The VRF air conditioning system according to claim 6, wherein the control module further controls a compressor in the outdoor machine according to the degree of superheat.

9. The VRF air conditioning system according to any one of claims 6 to 8, wherein the first heat exchanger and the second heat exchanger are configured as plate heat exchangers.

10. The VRF air conditioning system according to claim 6, wherein the VRF air conditioning system works in a refrigerating mode.
